# EUROPÄISCHE PATENTSCHRIFT

(11) **EP 0 818 949 B1**
(45) Veröffentlichungstag und Bekanntmachung des Hinweises auf die Patenterteilung: **06.12.2000**
(21) Anmeldenummer: 96907438.4
(22) Anmeldetag: 12.03.1996
(51) Int. Cl.: A01N 35/10, A01N 43/18, A01N 43/16, A01N 25/12, A01N 25/02

(54) **STABILE FESTFORMULIERUNGEN VON CYCLOHEXENONOXIMETHER-HERBIZIDEN**
STABLE SOLID FORMULATIONS OF CYCLOHEXENONE OXIME ETHER HERBICIDES
FORMULATIONS SOLIDES ET STABLES D'HERBICIDES A BASE DE CYCLOHEXENONOXIMETHER

(30) Priorität: 24.03.1995 DE 19510887
(43) Veröffentlichungstag der Anmeldung: 21.01.1998
(73) Patentinhaber: BASF AKTIENGESELLSCHAFT, 67056 Ludwigshafen (DE)
(72) Erfinder: BRATZ, Matthias, D-67117 Limburgerhof (DE); JÄGER, Karl-Friedrich, D-67117 Limburgerhof (DE); BERGHAUS, Rainer, D-67346 Speyer (DE); ZIEGLER, Hans, D-67112 Mutterstadt (DE)
(86) Internationale Anmeldenummer: EP9601046
(87) Internationale Veröffentlichungsnummer: WO9629869

(56) Entgegenhaltungen:
- DE-A- 2 822 304
- DE-A- 3 941 160
- US-A- 4 741 768
- CHEMICAL ABSTRACTS, vol. 122, no. 1, 2.Januar 1995 Columbus, Ohio, US; abstract no. 3446, J.D.NALEWAJA: "Sethoxydim response to spray carrier chemical properties and environment" XP002011112 & WEED TECHNOLOGY, Bd. 8, Nr. 3, 1994, Seiten 591-597,
- WEED TECHNOLOGY, Bd. 7, Nr. 2, 1993, Seiten 322-325, XP000579159 G.WANAMARTA ET AL.: "Overcoming Antagonistic Effects of Na-Bentazon on Sethoxydim Absorption"
- CHEMICAL ABSTRACTS, vol. 116, no. 23, 8.Juni 1992 Columbus, Ohio, US; abstract no. 230158, T.H.BECKETT ET AL.: "Quizalofop and sethoxydim activity as affected by adjuvants and ammonium fertilizers" XP002011113 & WEED SCI., Bd. 40, Nr. 1, 1992, Seiten 12-19,
- DATABASE WPI Section Ch, Week 8216 Derwent Publications Ltd., London, GB; Class C03, AN 82-32201E XP002011114 & JP,A,57 045 143 (NIPPON SODA KK) , 13.März 1982
- DATABASE WPI Section Ch, Week 8443 Derwent Publications Ltd., London, GB; Class C03, AN 84-266759 XP002011115 & JP,A,59 163 363 (NIPPON SODA KK) , 14.September 1984 in der Anmeldung erwähnt

## Beschreibung

Die vorliegende Erfindung betrifft Pflanzenschutzwirkstoff-Formulierungen, enthaltend einen Cyclohexenonoximether der allgemeinen Formel I, 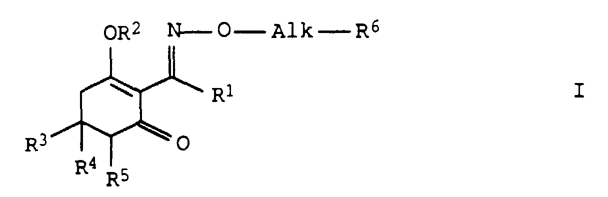 in welcher die Reste R¹-R⁶ die folgenden Bedeutungen haben:
- R¹: Ethyl oder Propyl;
- R²: Wasserstoff oder ein Äquivalent eines landwirtschaftlich brauchbaren Kations;
- R³: 2-(Thioethyl)propyl, Tetrahydrothiopyran-3-yl, Tetrahydrothiopyran-4-yl, Tetrahydropyran-3-yl,Tetrahydropyran-4-yl, 1-(Methylthio)cyclopropyl, 5-(iso-Propyl)isoxazol-3-yl, 2,5-Dimethylpyrazol-3-yl, 2,4,6-Trimethylphenyl oder 2,4,6-Trimethyl-3-butyrylphenyl;
- R⁴ und R⁵: unabhängig voneinander Wasserstoff, Methyl, Methoxycarbonyl;
- Alk: CH₂CH₂, CH₂CH(CH₃), CH₂CH=CH, CH₂CH=C(Cl) oder CH₂CH₂CH=CH;
- R⁶: Wasserstoff, Phenyl, Halogenphenyl, Dihalogenphenyl, Phenoxy, Halogenphenoxy oder Dihalogenphenoxy;
und einem wasserlöslichen basischen Salz einer Säure mit einem pKs-Wert größer als 5, wobei Alkalihydroxide und Alkalicarbonate ausgeschlossen sind, sowie deren Herstellung und Verwendung als Herbizide.

Cyclohexenonoximether der allgemeinen Formel I sind seit längerer Zeit als Herbizide bekannt. Darüberhinaus wirken sie in geringen Mengen als Wachstumsregulatoren.

Die herbizid wirksamen Cyclohexenonoximether der allgemeinen Formel I sind u.a. bekannt aus DE-A 24 39 104, DE-A 28 22 304, DE-A 38 08 072, DE-A 38 38 309, EP-A 046 860, EP-A 066 195, EP-A 071 707, EP-A 088 299, EP-A 088 301, EP-A 115 808, EP-A 125 094, EP-A 137 174, EP-A 142 741, EP-A 177 913, EP-A 228 598, EP-A 230 235, EP-A 230 260, EP-A 238 021, EP-A 243 313, EP-A 254 514, EP-A 319 835, EP-A 456 068, EP-A 456 069, EP-A 456 112, EP-A 456 118, U.S. 4,440,566, JP-A 54/191 945 und Proceedings Brit. Crop Protection Conference - Weeds 1985, Vol. 1, Seiten 93 - 98.

Cyclohexenonoximether-Metallsalze sind u.a. auch bekannt aus der älteren deutschen Patentanmeldung mit dem Aktenzeichen 195 45 212.7.

Zur Anwendung gelangen diese Verbindungen im allgemeinen in Form von wasserdispergierbaren Pulvern (WP) oder wasserdispergierbaren Granulaten (WG), sowie als emulgierbare Konzentrate (EC). Einige Verbindungen dieser Stoffklasse werden als wasserlösliche Formulierungen vertrieben, in denen der Wirkstoff als Alkalisalz vorliegt. Nachteil der emulgierbaren Konzentrate ist, daß neben dem eigentlichen Wirkstoff große Mengen organischer Lösungsmittel bei der Anwendung mit ausgebracht werden. Außerdem hat sich gezeigt, daß die Wirkstoffe in organischen Lösungsmitteln in Gegenwart von Emulgatoren oder von in Spuren vorhandenem Wasser instabil sind und sich zersetzen (vgl. z.B. EP-A 394 847 und EP-A 266 068).

Wasserdispergierbare Festformulierungen (WP oder WG) vermeiden zwar den Einsatz von organischen Lösungsmitteln, erfordern jedoch einen höheren Aufwand bei der Formulierungsherstellung. Die oft niedrig schmelzenden oder flüssigen Wirkstoffe müssen auf Trägermaterial aufgezogen werden, um der erforderlichen Feinmahlung zugänglich zu sein. Der Zusatz von Hilfs- und Trägerstoffen führt zudem dazu, daß die Wirkstoffgehalte in den Formulierungen niedrig ausfallen müssen, was zu einem erhöhten Verpackungs- und Transportaufwand führt. Beispiele solcher Formulierungen finden sich u.a. in EP-A 488 645.

Wasserlösliche Formulierungen wurden ebenfalls schon früher beschrieben. Es zeigt sich auch hier, daß die chemische Instabilität der Cyclohexenonoximether einer praktikablen Lösung im Wege stehen. So wird in JP 62089 653 beispielsweise ein Lithium-Salz beschrieben.

In verschiedenen Anmeldungen wird die Herstellung verschiedener Salze, darunter Salze von Übergangsmetallen, durch Umsalzen beschrieben. Für die Praxis erscheint dieses Verfahren nicht geeignet, da letztendlich keine ausreichende Stabilität erreicht wird (JP 59 1633 63, JP 8144 384, US 47 41 768, DE 3941160).

Die bevorzugte Art der Herstellung von Alkalisalzen ist die Extraktion der Wirkstoffe aus organischer Lösung mittels einer wäßrigen Lösung der Alkalihydroxide (z. B. DE 3941160).

Aufgabe der vorliegenden Erfindung war somit die Entwicklung lagerstabiler Festformulierungen von Cyclohexenonoximethern der allgemeinen Formel I sowie ein Verfahren zu deren Herstellung.

Die Aufgabe konnte überraschenderweise durch die eingangs beschriebene Pflanzenschutzwirkstoff-Formulierung gelöst werden.

Die Cyclohexenonoximether im Sinne der vorliegenden Erfindung sind schwache organische Säuren mit pKs-Werten zwischen 4 und 5. Ihre im neutralen Bereich geringe Löslichkeit in Wasser steigt bei basischen pH-Werten deutlich an. Es ist somit möglich, durch geeignete Kombination von Cyclohexenonen mit basischen wasserlöslichen Stoffen (Säureakzeptoren) wasserlösliche Mischungen zu erhalten.

Neben den in der Literatur erwähnten Alkalihydroxiden und Alkalicarbonaten eignen sich hierzu solche basischen wasserlöslichen Stoffe, die als Alkalisalze solcher Säuren aufzufassen sind, deren pKs-Wert größer als 5 ist. Bevorzugt wird der pKs-Wert des jeweiligen Cyclohexenons geprüft und anschließend ein basischer Stoff ausgewählt, dessen zugrundeliegender pKs-Wert größer als der des betreffenden Cyclohexenons ist.

Es ist zu erwarten, daß in Gegenwart von Wasser folgende Reaktion einsetzt: 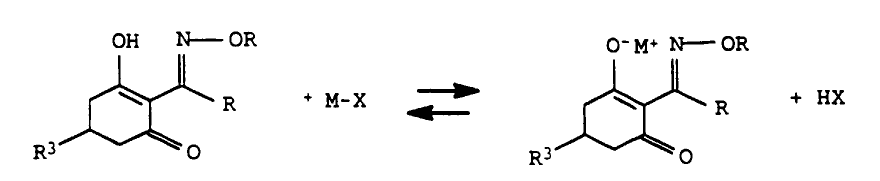 Voraussetzung dafür, daß anschließend eine klare Lösung entsteht, ist ferner, daß die sich bildende konjugate Säure HX ebenfalls wasserlöslich ist.

Neben der Wasserlöslichkeit weisen die erfindungsgemäßen Formulierungen aus Cyclohexenon und wasserlöslichen basischem Salz (Säureakzeptor) eine deutlich bessere Lagerstabilität bei erhöhten Temperaturen auf, als beispielsweise die freien Wirkstoffe oder deren Alkalisalze, die aus den Cyclohexenonen mit Alkalihydroxiden oder Alkalicarbonaten erhalten wurden.

Eine ausreichende Lagerstabilität ist ein wesentliches Merkmal kommerziell vermarktbarer und registrierbarer Pflanzenschutzmittel. Ferner stellt eine verminderte Zersetzung des Wirkstoffs per se einen ökonomischen Vorteil dar.

Um die geschilderte Wasserlöslichkeit und Lagerstabilität des Wirkstoffs zu erreichen, kommen als wasserlösliche basische Salze in Frage: Metaborate, Phosphate, Hydrogenphosphate, Pyrophosphate, Metasilikate, Orthosilikate, Tetraborate, Sulfite, Tripolyphosphate, Polyphosphate, Metaphosphate, Citrate, Tetranatrium-EDTA, Trinatriumnitrilotriessigsäure, Guanidinacetat, Guanidincarbonat sowie Mischungen der genannten Salze.

Bevorzugt sind folgende basische wasserlösliche Salze: Ammonium- und Alkali-Metaborate, Tetraborate, Metasilikate, ortho-Silikate, Phosphate, Hydrogenphosphate, Pyrophosphate, Tripolyphosphate, Polyphosphate, Sulfite, Citrate, Tetranatrium-EDTA, Trinatriumnitrilotriessigsäure, Guanidincarbonat, Guanidinacetat. Die Salze können in wasserfreier Form als auch in Form ihrer Hydrate eingesetzt werden.

Besonders bevorzugt sind Alkalimetaborate, Alkalitetraborate, Alkali- und Ammoniummetasilikate, Trialkali- und Triammoniumphosphate, Alkali- und Ammoniumhydrogenphosphate, Alkalipyrophosphate, Alkalitripolyphosphate, Alkalisulfite, Alkalicitrate, Tetranatrium-EDTA, Trinatriumnitrilotriessigsäure, Guanidincarbonat, Guanidinacetat, wobei die Salze in wasserfreier Form oder als Hydrate vorliegen können.

Bevorzugt sind die Natrium- und Kaliumsalze.

Ganz besonders bewährt haben sich Tetranatriumpyrophosphat, Dikaliumhydrogenphosphat, Guanidincarbonat, Tetranatrium-EDTA, Trinatriumnitrilotriessigsäure und vor allem Natriummetaborat, Natriummetasilikat, Trinatriumphosphat, aus denen wiederum Natriummetasilikat besonders herausragt.

Bevorzugte Cyclohexenonherbizide sind: 2-(N-Ethoxybutyrimidoyl)-5-(2-ethylthiopropyl)-3-hydroxy-2-cyclohexenon-1-on (Sethoxydim),
2-(1-Allyloxyiminobutyl)-4-methoxycarbonyl-5,5-dimethyl-3-oxocyclohexenol (Alloxydim),
2-(N-Ethoxybutyrimidoyl)-5-(2-phenylthiopropyl)3-hydroxy-2-cyclohexen-1-on,
5-(2,4,6-Trimethylphenyl)-3-hydroxy-2-[1-(Ethoxyimimo)-propyl]-cyclohex-2-en-1-on (Tralkoxydim),
2-(N-Ethoxybutyrimidoyl)-3-hydroxy-5-(tetrahydropyran-3-yl)-cyclohexen-1-on,
1-[1-Ethoxyimino)-butyl]-3-hydroxy-5-(tetrahydrothiopyran-3-yl)-2-cyclohexen-1-on (Cycloxydim),
2-[1-[(E)-3-chloroallyloxy]-iminopropyl]-5-(2-ethylthiopropyl)-3-hydroxycyclohex-2-enon (Clethodim),
2-(1-(3-Chlorallyloxy-iminobutyl)-5-(2-ethylthio)-propyl)-3-hydroxy-cyclohex-2-enon (Cloproxydim),
2-(1-(3-Chlorallyloxy )-iminipropyl)-5-(1,3-dimethylpyrazol-5-yl)-3-hydroxy-cyclohex-2-enon,
2-(1-(3-Chlorallyloxy)-iminopropyl)-5-(1-thiomethyl-cyclopropyl)-3-hydroxy-cyclohex-2-enon,
2-(1-Ethoxyiminopropyl)-5-(2,4,6-trimethyl-3-butyrylphenyl)-3-hydroxy-cyclohex-2-enon (Butroxydim),
2-(1-(3-Chlorallyloxy)-iminopropyl)-5-(tetrahydropyran-4-yl)-3-hydroxy-cyclohex-2-enon,
2-(1-(2-p-Chlorphenoxypropyloxy)-iminobutyl-5-(tetrahydrothiopyran-3-yl)-3-hydroxy-cyclohex-2-enon oder deren Gemische.

Besonders bevorzugte Cyclohexenonherbizide sind: Sethoxydim, Cycloxydim, Clethodim, Tralkoxydim, Butroxydim, 2-(1-(3-Chlorallyloxy)-iminopropyl)-5-(tetrahydropyran-4-yl)-3-hydroxy-cyclohex-2-enon, 2-(1-(2-p-Chlorphenoxypropyloxy)-iminobutyl-5-(tetrahydrothiopyran-3-yl)-3-hydroxy-cyclohex-2-enon oder deren Gemische.

Die Cyclohexenonoximether der allgemeinen Formel I können bei der Herstellung als Isomerengemische anfallen, wobei sowohl E-/Z-Isomerengemische als auch Enantiomeren- oder Diastereoisomerengemische möglich sind. Die Isomerengemische können gewünschtenfalls nach den hierfür üblichen Methoden, z. B. durch Chromatographie oder durch Kristallisation, getrennt werden.

Die Cyclohexenonoximether der allgemeinen Formel I können in mehreren tautomeren Formen vorliegen, die alle von der Erfindung umfaßt werden.

Die Erfindung umfaßt feste wasserlösliche Formulierungen, vorzugsweise in Form von Pulvern oder Granulaten, die als herbizide Komponente einen Cyclohexenonoximether und ein wasserlösliches basisches Salz enthalten. Der Anteil des Cyclohexenonoximethers liegt zwischen 5 und 95 %, bevorzugt zwischen 10 und 85 %, der Anteil des basischen Salzes liegt zwischen 5 und 95 %, bevorzugt zwischen 15 und 90 %, bezogen auf die Summe aus Cyclohexenonoximether und basischem Salz.

Um eine praxisgerechte Anwendung zu gewährleisten, kann es nötig sein, weitere Formulierhilfsmittel zuzusetzen. Hierzu gehören beispielsweise herbizid wirksame Verbindungen, Antidots, wasserlösliche Salze, Dispergiermittel, Netzmittel, Bindemittel, Schmiermittel, absorptive Trägerstoffe, Entschäumer, Konservierungsmittel, Farbstoffe, Pigmente oder weitere in der landwirtschaftlichen Praxis gebräuchliche Adjuvantien oder Surfactants.

Zusätzliche wasserlösliche Salze können sein: Natriumchlorid, Kaliumchlorid, Ammoniumsulfat, Natriumsulfat, Kaliumsulfat sowie Harnstoff, Kaliumcarbonat und Natriumcarbonat.

Weitere herbizid wirksame Verbindungen können sein:
2,4-D, 2,4-DB, Acetochlor, Acifluorfen, Aclonifen, Alachlor, Alidochlor, Ametryn, Amidosulfuron, Amitrol, Anilofos, Asulam, Atrazin, Azimsulfuron, Aziprotryn, Barban, Benazolin, Benefin, Benfuresate, Bensulfuron, Bensulide, Bentazon, Benzofenap, Benzofluor, Benzoylprop, Benzthiazuron, Bifenox, Bisalafos, Bromacil, Bromobutide, Bromofenoxim, Bromoxynil, Buminafos, Butachlor, Butamifos, Buten-achlor, Buthidazole, Butralin, Buturon, Butylate, Cafenstrole, Carbetamid, Chloramben, Chlorbromuron, Chlorbufam, Chlorfenac, Chloridazon, Chlorimuron, Chlornitrofen, Chlorophenprop, Chloroxuron, Chlorpropham, Chlorsulfuron, Chlorthaldimethyl, Chlorthiamid, Chlortoluron, Cinmethylin, Cinosulfuron, Clodinafop, Clomazone, Clomeprop, Clopyralid, Cumyluron, Cyanazine, Cycloate, Cyclosulfamuron, Cycluron, Cyhalofop, Cyperquat, Cyprazine, Cyprazole, Dalapon, Desmedipham, Desmetryn, Diallate, Dicamba, Dichlobenil, Dichlorprop, Dichlorprop-P, Diclofop, Diethatyl , Difenoxuron, Difenzoquat, Diflufenican, Dimefuron, Dimethachlor, Dimethamethryn, Dimethenamid, Dinitramin, Dinoseb, Dinoseb, Dinoterb, Diphenamid, Dipropetryn, Diquat, Dithiopyr, Diuron, DNOC, Dymron, Eglinazin, Endothall, EPTC, Esprocarb, Ethalfluralin, Ethametsulfuron, Ethidimuron, Ethiozin, Ethofumesate, Ethoxyfen, Etobenzanid, Fenoprop, Fenoxaprop, Fenoxaprop-p, Fenthiaprop, Fenuron, Flamprop, Flazasulfuron, Fluazifop, Fluazifop-p, Fluchloralin, Flumetsulam, Flumiclorac, Flumioxazin, Flumipropyn, Fluometuron, Fluorbentranil, Fluorochloridone, Fluorodifen, Fluoroglycofen, Flupoxam, Flupropacil, Fluridone, Fluroxypyr, Flurtamone, Fomesafen, Fosamin, Furyloxyfen, Glufosinateammonium, Glyphosate, Halosulfuron, Haloxyfop, Haloxyfop, Haloxyfop-p, Hexazinon, Imazamethapyr, Imazapyr, Imazaquin, Imazethabenz, Imazethapyr, Imazosulfuron, Ioxynil, Isocarbamid, Isopropalin, Isoproturon, Isouron, Isoxaben, Isoxapyrifop, Karbutilat, Lactofen, Lenacil, Linuron, Maleic, Hydrazide, MCPA, MCPB, Mecoprop, Mecoprop-P, Mefenacet, Mefluidide, Metamitron, Metazachlor, Methabenzthiazuron, Methazole, Metobenzuron, Metolachlor, Metosulam, Metoxuron, Metribuzin, Metsulfuron, Minoterb, Molinate, Monalide, Monolinuron, Monuron, Napropamide, Napropanilide, Naptalame, NCC 330, Neburon, Nicosulfuron, Nipyraclofen, Nitralin, Nitrofen, Nitrofluorfen, Norflurazon, Orbencarb, Oryzalin, Oxadiargyl, Oxadiazon, Oxyfluorfen, Paraquat, Pebulate, Pendimethalin, Perfluidone, Phenisopham, Phenmedipham, Picloram, Piperophos, PPG-1013, Pretilachlor, Primisulfuron, Procyazine, Prodiamine, Profluralin, Prometon, Prometryn, Propyzamid, Propachlor, Propanil, Propaquizafop, Propazin, Propham, Prosulfocarb, Prosulfuron, Prynachlor, Pyrazolate, Pyrazosulfuron, Pyrazoxyfen, Pyributicarb, Pyridate, Pyrithiobac, Quinclorac, Quinmerac, Quizalofop, Quizalofop-p, Quizalofop, Rimsulfuron, Secbumeton, Siduron, Simazin, Simetryn, Sulcotrione, Sulfallate, Sulfentrazone, Sulfometuron-methyl, Sulfosate, Tebuthiuron, Terbacil, Terbucarb, Terbuchlor, Terbumeton, Terbuthylazin, Terbutryn, Thiazopyr, Thidiazimin, Thifensulfuron-methyl, Thiobencarb, Tiocarbazil, Triallate, Triasulfuron, Triazofenamid, Tribenuron, Triclopyr, Tridiphane, Trietazin, Trifluralin, Triflusulfuron, Trimeturon, Vernolate, Xylachlor oder Mischungen aus diesen Stoffen. Die Co-Herbizide können wasserlöslich oder wasserunlöslich sein.

Im Falle wasserunlöslicher Verbindungen liegen diese als feinvermahlene Pulver vor. Es ist außerdem möglich, diese in Form von wasserdispergierbaren Granulaten in die Formulierung einzubringen. Im Falle wasserlöslicher Co-Herbizide können diese in Form der freien Säure oder als deren Salz vorliegen.

Als Dispergiermittel oder Netzmittel können u.a. verwendet werden: Alkylarylsulfonate; Phenylsulfonate; Alkylsufate; Alkylsulfonate; Alkylethersulfate; Alkylarylethersulfate; Alkylpolyglykoletherphosphate; Polyarylphenyletherphosphate; Alkylsulfosuccinate; Olefinsulfonate; Paraffinsulfonate; Petroleumsulfonate; Tauride; Sarkoside; Fettsäuren; Alkylnaphthalinsulfonsauren; Naphthalinsulfonsäuren; Ligninsulfonsäuren; Kondensationsprodukte sulfonierter Naphthaline mit Formaldehyd; oder mit Formaldehyd und Phenol; Lignin-Sulfit-Ablauge; Einschließlich ihrer Alkali-, Erdalkali-, Ammonium- und Amin-Salze; Alkylphenolalkoxylate; Alkoholalkoxylate; Fettaminalkoxylate; Polyoxyethylenglycerolfettsäureester; Rizinusölalkoxylate; Fettsäurealkoxylate; Fettsäureamidalkoxylate; Fettsäurepolydiethanolamide; Lanolinethoxylate; EO-/PO-Blockcopolymere; Fettsäurepolyglykolester; Isotridecylalkohol; Fettsäureamide; Methylcellulose; Fettsäureester; Silicon-Öle; Alkylpolyglykoside; Glycerolfettsäureester; Alkylphosphate; Quartäre Ammoniumverbindungen; Aminoxide; Betaine und Gemische dieser Verbindungen. Die Dispergier- und Netzmittel sind bekannte Stoffe und sind näher beschrieben, beispielsweise, in: McCutchesons: Emulsifiers & Detergents, MC Division, Glen Rock NJ; Stache, Tensid Taschenbuch, Hanser Verlag.

Als Bindemittel können verwendet werden: Polyvinylpyrrolidon, Polyvinylalkohol, Carboxymethylcellulose, Stärke, Vinylpyrrolidin-Vinylacetat-Copolymere und deren Gemische.

Als Schmiermittel können verwendet werden: Mg-Stearat, Na-Stearat, Talkum, Polyethylenglykol und deren Gemische.

Als absorptive Trägermaterialen können verwendet werden: Mineralerden wie Kieselsäuren, Kieselgele, Silikate, Talkum, Kaolin, Attaclay, Kalkstein, Kreide, Talkum, Bolus, Löß, Ton, Dolomit, Diatomeenerde, Calcium- und Magnesiumsulfat, Magnesiumoxid, gemahlene Kunststoffe, Düngemittel wie Ammoniumsulfat, Ammoniumphosphat, Ammoniumnitrat und Harnstoffe, pflanzliche Produkte wie Getreidemehle, Baumrinden-, Holz- und Nußschalenmehl, Cellulosepulver, Attapulgite, Montmorillorite, Glimmer, Vermiculite, synthetische Kieselsäuren, synthetische Calciumsilikate und deren Gemische.

Als Entschäumer kommen beispielweise Silikonemulsionen, langkettige Alkohole, Fettsäuren, fluororganische Verbindungen und deren Gemische in Betracht.

Die Formulierungshilfsmittel können in einer Konzentration von 0 bis 95 Gew.-% in der Pflanzenschutzwirkstoff-Formulierung mitverwendet werden. Sind sie Bestandteil der Formulierung, haben sich 5 bis 95 Gew.-% bewährt.

Weitere Pfanzenschutzwirkstoffe können in einer Konzentration von 0 bis 90 Gew.-% mitverwendet werden. Sie sind Bestandteil der Formulierung; es haben sich 10 bis 90 Gew.-% bewährt. Die genannten Gew.-% beziehen sich auf das Gesamtgewicht der Pflanzenschutzwirkstoff-Formulierung.

Die erfindungsgemäßen Festformulierungen lassen sich auf verschiedene, dem Fachmann im Prinzip bekannte Art und Weise herstellen.

Als Formulierungen kommen Pulver, Granulate, Brikets, Tabletten und ähnliche Festformulierungen in Frage. Neben Pulvern sind Granulate besonders bevorzugt. Bei den Pulvern kann es sich um wasserlösliche oder wasserdispergierbare Pulver handeln. Bei den Granulaten kann es sich um wasserlösliche oder wasserdispergierbare Granulate zum Einsatz in der Spritzapplikation oder um sog. Streugranulate zur Direktapplikation handeln. Die mittlere Teilchengröße der Granulate liegt zwischen 200 µm und 2 mm.

Da es sich bei diesen Formulierungen um oftmals hygroskopische Körper handelt oder etwa zum vorbeugenden Anwenderschutz können die Formulierungen in wasserlösliche Folienbeutel verpackt werden. Vorzugsweise wird in die Verpackung außerdem eine wasserdampfundurchlässige äußere Hülle wie Polyethylen-Folie, Polyethylen-laminiertes Papier oder Alufolie eingesetzt.

Geeignete wasserlösliche Folien bestehen aus folgenden Materialien: Polyvinylalkohol, Cellulose-Derivate wie Methylcellulose oder Carboxymethylcellulose.

Die Bekämpfung von erwünschtem Pflanzenwuchs erfolgt so, daß man eine herbizid wirksame Menge einer Pflanzenschutzwirkstoff-Formulierung auf die Kulturpflanze, deren Lebensraum und/oder auf deren Saatgut einwirken läßt.

Folgende Herstellverfahren sind für die erfindungsgemäßen Formulierungen geeignet:
a) Wirkstoff ist fest
   1) Mischen von Wirkstoff, basischem Salz weiteren Hilfsstoffen, ggf. Zerkleinern und anschließendes Agglomerieren.
      Zur Agglomeration eignen sich beispielsweise die Verfahren der Extrudergranulation, Tellergranulation, Wirbelschichtgranulation oder Mischergranulation. Ggf. werden die erhaltenen Granulate anschließend getrocknet.
   2) Mischen von Wirkstoff, basischem Salz und weiteren Hilfsstoffen, ggf. Zerkleinern und anschließendes Kompaktieren.
b) Wirkstoff ist ein Öl oder ein Feststoff
   1) Extraktion des in einem organischen Lösungsmittel gelösten Cyclohexenonoximethers mittels einer wäßrigen Lösung des basischen Salzes in die wäßrige Phase und anschließende Entfernung des Wassers.
   Als organische Lösungsmittel eigenen sich mit Wasser nicht, oder nur teilweise mischbare Solventien wie Kohlenwasserstoffe, aromatische Kohlenwasserstoffe, halogenierte aliphatische oder aromatische Kohlenwasserstoffe, Ether, Carbonsäureester, Carbonsäureamide, Ketone, Alkohole.
   Zur Verdampfung des Wassers eigenen sich beispielsweise Sprühtrocknung, Vakuumtrocknung, Wirbelschichttrocknung, Gefriertrocknung.
   Die hierbei anfallenden Feststoffe können anschließend wie unter a) weiterverarbeitet werden.
   Weiterhin kann die so erhaltene wäßrige Lösung auf ein absorptives Trägermaterial aufgebracht werden, z. B. durch Aufsprühen oder Mischen. Auf diese Weise lassen sich beispielsweise Streugranulate erhalten.

### Formulierungsbeispiele:

a) Prüfmethoden
Der Wirkstoffgehalt der Formulierungen wurde jeweils mittels quantitativer HPLC bestimmt, und wird in Prozent angegeben.
Versuche zur Lagerstabilität
Zur Untersuchung der Lagerstabilität wurden Proben der jeweiligen Formulierung für eine bestimmte Zeit in fest verschlossenem Glasgefãßen bei der jeweils angegebenen Temperatur gelagert. Anschließend wurden die Proben untersucht und mit dem Vergleichswert zu Beginn der Lagerung (Nullwert) verglichen. Der Wirkstoffgehalt ist als relativer Anteil, bezogen auf den Nullwert (in Prozent) angegeben.
Versuche zum Auf lösungsverhalten
2 g der Formulierung wurden auf einmal in 100 ml CIPAC-Standardwasser D gegeben, daß mittels Magnetrührer mit ca. 100 rpm gerührt wurde. Es wurde die Zeit gestoppt, die verging, bis das gesamte Festprodukt zerfallen bzw. aufgelöst war.
b) Formulierungsversuche
Es wurden folgende Verbindungen für Formulierungsversuche verwendet:

| | |
|---|---|
| Verbindung A | Sethoxydim |
| Verbindung B | Cycloxydim |
| Verbindung C | 2-(1-(3-Chlorallyloxy)-iminopropyl)-5-(tetrahydropyran-4-yl)-3-hydroxy-cyclohex-2-enon |
| Verbindung D | 2-(1-(2-p-Chlorphenoxypropyloxy)-imino-butyl-5-(tetrahydrothiopyran-3-yl)-3-hydroxy-cyclohexenon |

### Vergleichsbeispiel 1:

51,4 g Verbindung C (Gehalt 97 %) wurden mit einem Gemisch aus 1 Teil Natriumcarbonat und 1 Teil Natriumhydrogencarbonat (48,6 g) in einer IKA-Labormühle (Typ M 20) für 60 sec. gemischt. Die Mischung war in Wasser innerhalb von weniger als 5 min löslich. Der Wirkstoffgehalt betrug 49,3 %.

### Beispiel 1:

51,4 g Verbindung C (Gehalt 97 %) wurden mit Natriummetasilikat (48,6 g) in einer IKA-Labormühle (Typ M 20) für 60 sec. gemischt. Die Mischung war in Wasser innerhalb von weniger als 5 min klar löslich. Der Wirkstoffgehalt betrug 42 %.

### Beispiel 2:

51,4 g Verbindung C und 48,6 Trinatriumphosphat-Dodekahydrat wurden wie in Bsp. 1 beschrieben gemischt. Wirkstoffgehalt: 46 %.

Die Lagerstabilität bei Raumtemperatur wurde für 3 Monate beobachtet und verglichen.

| | relativer Gehalt an Verbindung C nach | |
|---|---|---|
| | 1 Monat [%] | 3 Monaten [%] |
| Vergleichsbsp. 1 | 91 | 68 |
| Beispiel 1 | 100 | 95 |
| Beispiel 2 | 99 | 78 |

### Vergleichsbeipiel 2:

500 g Wirkstoff C wurden in 1000 g Toluol gelöst. Diese Lösung wurde mit einer Lösung von 58,5 g Natriumhydroxid in 650 g Wasser während 1 Stunde gemischt. Nach Phasentrennung wurde die homogene wäßrige Phase abgetrennt und anschließend in einem Laborwirbelschichtgranulator bei 120 °C Eingangstemperatur der Trocknungsluft zu einem Granulat getrocknet. Der Wirkstoffgehalt betrug 86,8 %. Das Granulat löste sich beim Einbringen in Wasser schnell und vollständig auf.

### Vergleichsbeispiel 3:

92,3 g Wirkstoff D wurden in 90 g Toluol gelöst. Diese Lösung wurde mit einer Lösung von 7,66 g Natronlauge in 100 g Wasser während 1 Stunde gemischt. Nach Phasentrennung wurde die homogene wäßrige Phase abgetrennt, mit MTB-Äther gewaschen und danach im Vakuumtrockenschrank bei 40 °C Trocknungstemperatur zu einem Festprodukt getrocknet. Das Festprodukt hatte einen Wirkstoffgehalt von 87,1 % und löste sich beim Einbringen in Wasser schnell und vollständig auf.

### Vergleichsbeispiel 4:

Eine 30 %-ige Lösung von Wirkstoff D in Toluol wurde mit 2,5 %-iger NaOH extrahiert. Die wäßrigen Phasen wurden gesammelt und im Vakuumtrockenschrank bei 70 °C getrocknet. Der erhaltene Feststoff hatte einen Wirkstoffgehalt von 84,6 % und war in Wasser innerhalb von 2 min klar löslich.

### Beispiel 3:

50 ml einer 50 %-igen Lösung von Verbindung A in tert.-Butylmethylether wurden mit einer Lösung von 10,2 g Natriummetasilikat in 50 ml Wasser geschüttelt. Nach Abtrennen der wäßrigen Phase wurde die etherische Phase mit 30 ml Wasser nachgewaschen. Die vereinten wäßrigen Phasen wurden bei 70 °C im Vakuum eingedampft. Der erhaltene feste Rückstand war in Wasser innerhalb von 2 min klar löslich. Wirkstoffgehalt: 70 %.

### Beispiel 4:

50 ml einer Lösung von Cycloxydim (Verbindung B) in Solvesso 150 (430 g/l) wurden mit einer Lösung von 17,7 g Natriummetasilikat in 85 ml Wasser extrahiert. Nach Abtrennen der wäßrigen Phase wurde die organische Phase mit 30 ml Wasser nachgewaschen und die vereinten wäßrigen Phasen bei 70 °C im Vakuum eingedampft. Der erhaltene Rückstand war in Wasser innerhalb von 2 min klar löslich. Wirkstoffgehalt: 57 %.

### Beispiel 5:

Ein Gemisch aus Natriummetaborat-Hydrat (48,6 g) und Verbindung C (51,4 g) wurden zunächst in einer IKA-Universalmühle, Typ M 20, vermischt und dann sukzessive mit 7,2 ml Wasser versetzt. Die so erhaltene Masse wurde mit einem Korbextruder-Tischgerät (Fitzpatrick Company Europe, Typ KAR 75) bei einer Siebgröße von 0,8 mm extrudiert. Die erhaltenen Granulate wurden bei 60 °C getrocknet. Wirkstoffgehalt: 55 %. Das Granulat löste sich in weniger als 4 min vollständig in Wasser.

### Beispiel 6:

Ein Gemisch aus Natriumphosphat-Dodekahydrat (58,9 g) und Verbindung C (41,1 g) wurde unter Zugabe von 3,8 ml Wasser, wie in Beispiel 5 beschrieben, extrudiert. Wirkstoffgehalt: 52 %. Das Granulat löste sich innerhalb von 3 min in Wasser klar auf.

### Beispiel 7:

Ein Gemisch aus Natriummetasilikat (48,6 g) und Verbindung C (51,4 g) wurde, wie in Beispiel 5 beschrieben, unter Zugabe von 25 g Wasser extrudiert. Wirkstoffgehalt: 45 %. Das Granulat löste sich innerhalb von 2 min klar in Wasser.

### Beispiel 8:

Ein Gemisch aus Verbindung C (72 %) und Natriummetasilikat (28 %) wurde in einer IKA-Universalmühle Typ M 20 vermischt und unter Zugabe von insgesamt 22,5 g Wasser angeteigt. Die erhaltene Masse wurde, wie in Beispiel 5 beschrieben, extrudiert und das erhaltene Granulat bei 60 °C getrocknet. Wirkstoffgehalt: 64 %. Das Granulat löste sich innerhalb von 2 min klar in Wasser.

### Beispiel 9:

217,5 g Wirkstoff C wurden in 200 g Toluol gelöst. Diese Lösung wurde mit einer Lösung von 82,5 g Natriummetasilikat in 300 g Wasser während 1 Stunde gemischt. Nach Phasentrennung im Scheidetrichter wurde die homogene wäßrige Phase abgetrennt und anschließend in einem Laborwirbelschichtgranulator (Combi Coater, Fa. Niro Aeromatic) bei 120 °C Eingangstemperatur der Trocknungsluft zu einem Granulat getrocknet. Der Wirkstoffgehalt betrug 64,2 %. Das Granulat löste sich beim Einbringen in Wasser schnell und vollständig auf.

### Beispiel 10:

In 100 g Wasser wurden 16,0 g Natriummetasilikat und 84,82 g Wirkstoff C gemischt und umgesetzt. Es entstand eine wäßrige Lösung. Diese wurde im Vakuumtrockenschrank bei 70 °C Trocknungstemperatur zu einem Festprodukt getrocknet. Der Wirkstoffgehalt betrug 73,7 %. Das Festprodukt löste sich beim Einbringen in Wasser schnell und vollständig auf.

### Beispiel 11:

79,8 g Wirkstoff D wurden in 100 g Toluol gelöst. Diese Lösung wurde mit einer Lösung von 20,8 g Natriummetasilikat in 100 g Wasser während 1 Stunde gemischt und umgesetzt. Nach Stehenlassen bilden sich 3 Phasen. Die beiden unteren, wäßrigen Phasen wurden im Scheidetrichter abgetrennt und anschließend bei 70 °C Trocknungstemperatur im Vakuumtrockenschrank zu einem Festprodukt mit einem Wirkstoffgehalt von 78,7 % getrocknet. Das Festprodukt löste sich beim Einbringen in Wasser schnell und vollständig auf.

### Beispiel 12:

88,75 g Wirkstoff D wurden in 100 g Toluol gelöst. Diese Lösung wurde mit einer Lösung von 11,6 g Natriummetasilikat in 100 g Wasser während 1 Stunde gemischt und umgesetzt. Nach Stehenlassen bilden sich 3 Phasen. Die beiden unteren, wäßrigen Phasen wurden im Scheidetrichter abgetrennt und anschließend bei 70 °C Trocknungstemperatur im Vakuumtrockenschrank zu einem Festprodukt mit einem Wirkstoffgehalt von 88,4 % getrocknet. Das Festprodukt löste sich beim Einbringen in Wasser schnell und vollständig auf.

### Beispiel 13:

Verbindung C (7,6 g) und Bentazon-Natrium-Salz (84,7 g; Gehalt ca. 85 %) wurden in einer IKA-Universalmühle zusammen mit Natriummetasilikat (7,7 g) innig vermischt und anschließend mit 8,5 ml Wasser befeuchtet. Nach Extrusion der erhaltenen Masse erhielt man ein Granulat, das innerhalb von 1 min klar in Wasser löslich war. Wirkstoffgehalt (Verbindung C): 6,8 %

### Beispiel 14:

Wie in Beispiel 13 beschrieben, wurden 84,7 g Na-Bentazon, 7,6 g Verbindung C, 7,7 g Natriummetaborat und 6 ml Wasser gemischt und extrudiert. Das erhaltene Granulat war innerhalb von 1 min klar in Wasser löslich.
Wirkstoffgehalt (Verbindung C): 6,5 %

**Tabelle:**

| Ergebnisse der Versuche zur Lagerstabilität von Wirkstoffen in Formulierungen bei bestimmten Temperaturen und bei einer Lagerzeit von 30 Tagen. Angegeben ist der relative Wirkstoffgehalt (%) bezogen auf den Anfangsgehalt. | | | | |
|---|---|---|---|---|
| | 20 °C | 30 °C | 40 °C | 50 °C |
| Vergleichsbsp. Nr. | | | | |
| 2 | 100 | 99 | 88 | 42 |
| 3 | 100 | 98 | 88 | 40 |
| 4 | 100 | 96 | 80 | 19 |
| Beispiel Nr. | | | | |
| 4 | 100 | 100 | 96 | 96 |
| 5 | 100 | 100 | 98 | 83 |
| 6 | 100 | 99 | 99 | 87 |
| 7 | 100 | 100 | 100 | 99 |
| 8 | 100 | 100 | 100 | 100 |
| 9 | 100 | 100 | 100 | 78 |
| 10 | 100 | 100 | 99 | 77 |
| 11 | 99 | 99 | 99 | 85 |
| 12 | 99 | 99 | 99 | 90 |

## Patentansprüche

1. Verwendung eines wasserlöslichen basischen Salzes einer Säure mit einem pKs-Wert größer als 5, wobei Alkalihydroxide und Alkalicarbonate ausgeschlossen sind, zur Herstellung einer lagerstabilen, wasserlöslichen Pflanzenschutzwirkstoff-Festformulierung, enthaltend einen Cyclohexenonoximether der allgemeinen Formel I, 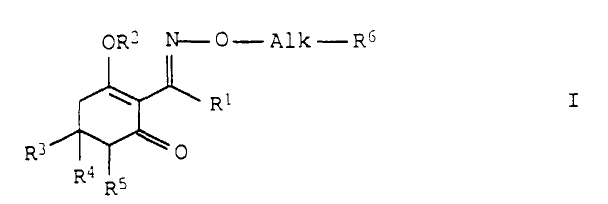 in welcher die Reste R¹-R⁶ die folgenden Bedeutungen haben:
R¹ Ethyl oder Propyl;
R² Wasserstoff oder ein Äquivalent eines landwirtschaftlich brauchbaren Kations;
R³ 2-(Thioethyl)propyl, Tetrahydrothiopyran-3-yl, Tetrahydrothiopyran-4-yl, Tetrahydropyran-3-yl, Tetrahydropyran-4-yl, 1-(Methylthio)cyclopropyl, 5-(iso-Propyl)isoxazol-3-yl, 2,5-Dimethylpyrazol-3-yl, 2,4,6-Trimethylphenyl oder 2,4,6-Trimethyl-3-butyrylphenyl;
R⁴ und R⁵ unabhängig voneinander Wasserstoff, Methyl, Methoxycarbonyl;
Alk CH₂CH₂, CH₂CH(CH₃), CH₂CH=CH, CH₂CH=C(Cl) oder CH₂CH₂CH=CH;
R⁶ Wasserstoff, Phenyl, Halogenphenyl, Dihalogenphenyl, Phenoxy, Halogenphenoxy oder Dihalogenphenoxy;
zur Bekämpfung von unerwünschtem Pflanzenwuchs.

2. Verwendung eines wasserlöslichen basischen Salzes nach Anspruch 1 aus der Gruppe: Metaborat, Phosphat, Hydrogenphosphat, Pyrophosphat, Metasilikat, Orthosilikat, Tetraborat, Sulfit, Tripolyphosphat, Polyphosphat, Metaphosphat, Tetranatrium EDTA, Trinatriumnitrilotriessigsäure, Guanidinacetat, Guanidincarbonat oder deren Gemische zur Herstellung einer Pflanzenschutzwirkstoff-Festformulierung.

3. Verwendung eines wasserlöslichen basischen Salzes aus der Gruppe: Alkalimetaborat, Alkalitetraborat, Alkali- und Ammoniummetasilikat, Trialkali- und Triammoniumphosphat, Alkali- und Ammoniumhydrogenphosphat, Alkalipyrophosphat, Alkalitripolyphosphat, Alkalisulfit, Alkalipolyphosphat, Tetranatrium-EDTA, Trinatriumnitrilotriessigsäure, Guanidincarbonat, Guanidinacetat oder deren Gemische zur Herstellung einer Pflanzenschutzwirkstoff-Festformulierung nach den Ansprüchen 1 und 2.

4. Verwendung eines wasserlöslichen basischen Salzes nach den Ansprüchen 1 bis 3 zur Herstellung einer Pflanzenschutzwirkstoff-Festformulierung, enthaltend als Pflanzenschutzwirkstoff einen Cyclohexenonoximether aus der Gruppe: Sethoxydim, Cycloxydim, Clethodim, Tralkoxydim, Butroxydim, 2-(1-(3-Chlorallyloxy)-iminopropyl)-5-(tetrahydropyran-4-yl)-3-hydroxycyclohex-2-enon, 2-(1-(2-p-Chlorphenoxypropyloxy)-iminobutyl-5-(tetrahydrothiopyran-3-yl)-3-hydroxy-cyclohex-2-enon oder deren Gemische.

5. Verwendung eines wasserlöslichen basischen Salzes nach den Ansprüchen 1 bis 4 zur Herstellung einer Pflanzenschutzwirkstoff-Festformulierung, enthaltend weiterhin Formulierungshilfsmittel.

6. Verwendung eines wasserlöslichen basischen Salzes nach den Ansprüchen 1 bis 5 zur Herstellung einer Pflanzenschutzwirkstoff-Festformulierung, enthaltend weiterhin Formulierungshilfsmittel.

7. Verwendung eines wasserlöslichen basischen Salzes nach den Ansprüchen 1 bis 6 zur Herstellung einer Pflanzenschutzwirkstoff-Festformulierung, enthaltend
5 bis 95 Gew.-% eines Cyclohexenonoximethers der allgemeinen Formel I,
5 bis 95 Gew.-% eines wasserlöslichen basischen Salzes,
0 bis 95 Gew.-% Formulierungshilfsmittel,
0 bis 90 Gew.-% weiterer Pflanzenschutzwirkstoffe.

8. Stabile, wasserlösliche Pflanzenschutzwirkstoff-Festformulierung, enthaltend einen Cyclohexenonoximether der allgemeinen Formel I, 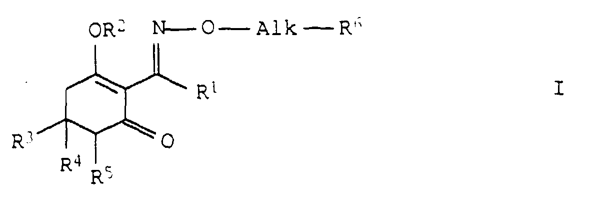 in welcher die Reste R¹-R⁶ die folgenden Bedeutungen haben:
R¹ Ethyl oder Propyl;
R² Wasserstoff oder ein Äquivalent eines landwirtschaftlich brauchbaren Kations;
R³ 2-(Thioethyl)propyl, Tetrahydrothiopyran-3-yl, Tetrahydrothiopyran-4-yl, Tetrahydropyran-3-yl, Tetrahydropyran-4-yl, 1-(Methylthio)cyclopropyl, 5-(iso-Propyl)isoxazol-3-yl, 2,5-Dimethylpyrazol-3-yl, 2,4,6-Trimethylphenyl oder 2,4,6-Trimethyl-3-butyrylphenyl;
R⁴ und R⁵ unabhängig voneinander Wasserstoff, Methyl, Methoxycarbonyl;
Alk CH₂CH₂, CH₂CH(CH₃), CH₂CH=CH, CH₂CH=C(Cl) oder CH₂CH₂CH=CH;
R⁶ Wasserstoff, Phenyl, Halogenphenyl, Dihalogenphenyl, Phenoxy, Halogenphenoxy oder Dihalogenphenoxy;
und ein wasserlösliches basisches Salz einer Säure mit einem pKs-Wert größer als 5, wobei Alkalihydroxide, Alkalicarbonate und Ammoniumsalze ausgeschlossen sind.

9. Stabile, wasserlösliche Pflanzenschutzwirkstoff-Festformulierung nach Anspruch 8, enthaltend als Pflanzenschutzwirkstoff einen Cyclohexenonoximether aus der Gruppe: Sethoxydim, Cycloxydim, Clethodim, Tralkoxydim, Butroxydim, 2-(1-(3-Chlorallyloxy)-iminopropyl)-5-(tetrahydropyran-4-yl)-3-hydroxycyclohex-2-enon, 2-(1-(2-p-Chlorphenoxypropyloxy)-iminobutyl-5-(tetrahydrothiopyran-3-yl)-3-hydroxy-cyclohex-2-enon oder deren Gemische.

10. Stabile, wasserlösliche Pflanzenschutzwirkstoff-Festformulierung nach Anspruch 8 oder 9, enthaltend als wasserlösliches Salz ein Metaborat, Phosphat, Hydrogenphosphat, Pyrophosphat, Metasilikat, Orthosilikat, Tetraborat, Sulfit, Tripolyphosphat, Polyphosphat, Metaphosphat, Tetranatrium EDTA, Trinatriumnitrilotriessigsäure, Guanidinacetat, Guanidincarbonat oder deren Gemische.

11. Stabile, wasserlösliche Pflanzenschutzwirkstoff-Festformulierung nach den Ansprüchen 8 oder 9, enthaltend als wasserlösliches basisches Salz ein Alkalimetaborat, Alkalitetraborat, Alkalimetasilikat, Trialkaliphosphat, Alkalihydrogenphosphat, Alkalipyrophosphat, Alkalitripolyphosphat, Alkalisulfit, Alkalipolyphosphat, Tetranatrium-EDTA, Trinatriumnitrilotriessigsäure, Guanidincarbonat, Guanidinacetat oder deren Gemische.

12. Stabile, wasserlösliche Pflanzenschutzwirkstoff-Festformulierung nach den Ansprüchen 8 bis 11, enthaltend weiterhin Formulierungshilfsmittel.

13. Stabile, wasserlösliche Pflanzenschutzwirkstoff-Festformulierung nach den Ansprüchen 8 bis 12, enthaltend weitere Pflanzenschutzwirkstoffe.

14. Stabile, wasserlösliche Pflanzenschutzwirkstoff-Festformulierung nach den Ansprüchen 8 bis 13, enthaltend
5 bis 95 Gew.-% eines Cyclohexenonoximethers der allgemeinen Formel I,
5 bis 95 Gew.-% eines wasserlöslichen basischen Salzes,
0 bis 95 Gew.-% Formulierungshilfsmittel,
0 bis 90 Gew.-% weiterer Pflanzenschutzwirkstoffe.

15. Verfahren zur Herstellung einer Pflanzenschutzwirkstoff-Festformulierung gemäß den Ansprüchen 8 bis 14, dadurch gekennzeichnet, daß man einen Cyclohexenonoximether der allgemeinen Formel I, das wasserlösliche basische Salz, ggf. Formulierungshilfsmittel und ggf. weitere Pflanzenschutzwirkstoffe mischt, ggf. zerkleinert und anschließend agglomeriert oder kompaktiert.

16. Verfahren zur Herstellung einer Pflanzenschutzwirkstoff-Festformulierung gemäß den Ansprüchen 8 bis 14, dadurch gekennzeichnet, daß man einen Cyclohexenonoximether der allgemeinen Formel I in einem organischen Lösungsmittel löst, mit einer wäßrigen Lösung des wasserlöslichen basischen Salzes extrahiert und anschließend das Wasser entfernt.

17. Verfahren nach Anspruch 16, dadurch gekennzeichnet, daß man die Pflanzenschutzwirkstoff-Festformulierung nach Entfernen des Wassers ggf. zerkleinert und anschließend agglomeriert oder kompaktiert.

18. Verfahren nach Anspruch 15 oder 17, dadurch gekennzeichnet, daß man zur Agglomeration die Extrudergranulation, Tellergranulation, Wirbelschichtgranulation oder Mischergranulation verwendet.

19. Verfahren zur Bekämpfung von unerwünschtem Pflanzenwuchs, dadurch gekennzeichnet, daß man eine herbizid wirksame Menge einer Pflanzenschutzwirkstoff-Festformulierung gemäß den Ansprüchen 8 bis 14 löst und auf die Kulturpflanze, deren Lebensraum und/oder auf deren Saatgut einwirken läßt.

20. Stabile, wasserlösliche Pflanzenschutzwirkstoff-Festformulierung nach Anspruch 8, wobei
R² für Natrium,
R³ für Tetrahydrothiopyran-3-yl,
R⁴ und R⁵ für Wasserstoff,
Alk für CH₂CH(CH₃) und
R⁶ für p-Chlorphenoxy stehen.

21. 2-[1-(2-p-Chlorphenoxypropyloxy)iminobutyl]-5-(tetrahydrothiopyran-3-yl)-3-hydroxycyclohexenon-Natriumsalz.

22. Stabile, wasserlösliche Pflanzenschutzwirkstoff-Festformulierung nach Anspruch 13 oder 14, enthaltend Glyphosate oder ein Salz dieser Verbindung als weiteren Pflanzenschutzwirkstoff.

## Claims

1. The use of a water-soluble basic salt of an acid having a pKₐ of greater than 5, alkali metal hydroxides and alkali metal carbonates being excluded, for preparing a storage-stable, water-soluble crop protection solid active compound formulation, comprising a cyclohexenone oxime ether of the general formula I 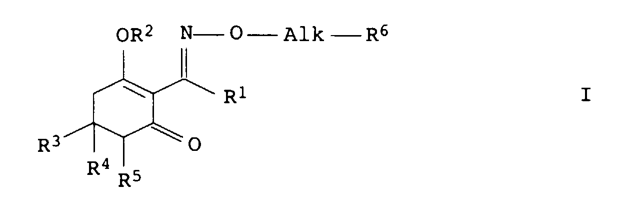 where the radicals R¹-R⁶ have the following meanings:
R¹ is ethyl or propyl;
R² is hydrogen or an equivalent of an agriculturally utilizable cation;
R³ is 2-thioethylpropyl, tetrahydrothiopyran-3-yl, tetrahydrothiopyran-4-yl, tetrahydropyran-3-yl, tetrahydropyran-4-yl, 1-methylthiocyclopropyl, 5-isopropylisoxazol-3-yl, 2,5-dimethylpyrazol-3-yl, 2,4,6-trimethylphenyl or 2,4,6-trimethyl-3-butyrylphenyl;
R⁴ and R⁵ independently of one another are hydrogen, methyl or methoxycarbonyl;
Alk is CH₂CH₂, CH₂CH(CH₃), CH₂CH=CH, CH₂CH=C(Cl) or CH₂CH₂CH=CH;
R⁶ is hydrogen, phenyl, halophenyl, dihalophenyl, phenoxy, halophenoxy or dihalophenoxy;
for controlling undesired vegetation.

2. The use of a water-soluble basic salt as claimed in claim 1 from the group consisting of metaborate, phosphate, hydrogen phosphate, pyrophosphate, metasilicate, orthosilicate, tetraborate, sulfite, tripolyphosphate, polyphosphate, metaphosphate, tetrasodium EDTA, trisodium nitrilotriacetate, guanidine acetate, guanidine carbonate or mixtures thereof for preparing a crop protection solid active compound formulation.

3. The use of a water-soluble basic salt from the group consisting of alkali metal metaborate, alkali metal tetraborate, alkali metal and ammonium metasilicate, trialkali metal and triammonium phosphate, alkali metal and ammonium hydrogen phosphate, alkali metal pyrophosphate, alkali metal tripolyphosphate, alkali metal sulfite, alkali metal polyphosphate, tetrasodium EDTA, trisodium nitrilotriacetate, guanidine carbonate, guanidine acetate or mixtures thereof for preparing a crop protection solid active compound formulation as claimed in claim 1 or 2.

4. The use of a water-soluble basic salt as claimed in claims 1 to 3 for preparing a crop protection solid active compound formulation, comprising, as crop protection active compound, a cyclohexenone oxime ether from the group consisting of sethoxydim, cycloxydim, clethodim, tralkoxydim, butroxydim, 2-(1-(3-chloroallyloxy)iminopropyl)-5-(tetrahydropyran-4-yl)-3-hydroxycyclohex-2-enone, 2-(1-(2-p-chlorophenoxypropyloxy)iminobutyl-5-(tetrahydrothiopyran-3-yl)-3-hydroxycyclohex-2-enone or mixtures thereof.

5. The use of a water-soluble basic salt as claimed in claims 1 to 4 for preparing a crop protection solid active compound formulation, furthermore comprising formulation auxiliaries.

6. The use of a water-soluble basic salt as claimed in claims 1 to 5 for preparing a crop protection solid active compound formulation, furthermore comprising formulation auxiliaries.

7. The use of a water-soluble basic salt as claimed in claims 1 to 6 for preparing a crop protection solid active compound formulation, comprising
from 5 to 95% by weight of a cyclohexenone oxime ether of the general formula I,
from 5 to 95% by weight of a water-soluble basic salt,
from 0 to 95% by weight of a formulation auxiliary,
from 0 to 90% by weight of further crop protection active compounds.

8. A stable, water-soluble crop protection solid active compound formulation, comprising a cyclohexenone oxime ether of the general formula I 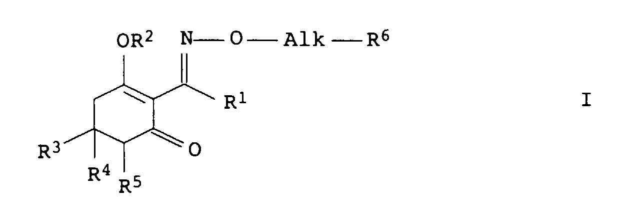 where the radicals R¹-R⁶ have the following meanings:
R¹ is ethyl or propyl;
R² is hydrogen or an equivalent of an agriculturally utilizable cation;
R³ is 2-thioethylpropyl, tetrahydrothiopyran-3-yl, tetrahydrothiopyran-4-yl, tetrahydropyran-3-yl, tetrahydropyran-4-yl, 1-methylthiocyclopropyl, 5-isopropylisoxazol-3-yl, 2,5-dimethylpyrazol-3-yl, 2,4,6-trimethylphenyl or 2,4,6-trimethyl-3-butyrylphenyl;
R⁴ and R⁵ independently of one another are hydrogen, methyl or methoxycarbonyl;
Alk is CH₂CH₂, CH₂CH(CH₃), CH₂CH=CH, CH₂CH=C(Cl) or CH₂CH₂CH=CH;
R⁶ is hydrogen, phenyl, halophenyl, dihalophenyl, phenoxy, halophenoxy or dihalophenoxy;
and a water-soluble basic salt of an acid having a pKₐ of greater than 5, alkali metal hydroxides, alkali metal carbonates and ammonium salts being excluded.

9. A stable, water-soluble crop protection solid active compound formulation as claimed in claim 8, comprising, as crop protection active compound, a cyclohexenone oxime ether from the group consisting of sethoxydim, cycloxydim, clethodim, tralkoxydim, butroxydim, 2-(1-(3-chloroallyloxy)iminopropyl)-5-(tetrahydropyran-4-yl)-3-hydroxycyclohex-2-enone, 2-(1-(2-p-chlorophenoxypropyloxy)-iminobutyl-5-(tetrahydrothiopyran-3-yl)-3-hydroxycyclohex-2-enone or mixtures thereof.

10. A stable, water-soluble crop protection solid active compound formulation as claimed in claim 8 or 9, comprising as water-soluble salt a metaborate, phosphate, hydrogen phosphate, pyrophosphate, metasilicate, orthosilicate, tetraborate, sulfite, tripolyphosphate, polyphosphate, metaphosphate, tetrasodium EDTA, trisodium nitrilotriacetate, guanidine acetate, guanidine carbonate or mixtures thereof.

11. A stable, water-soluble crop protection solid active compound formulation as claimed in claim 8 or 9, comprising as water-soluble basic salt an alkali metal metaborate, alkali metal tetraborate, alkali metal metasilicate, trialkali metal phosphate, alkali metal hydrogen phosphate, alkali metal pyrophosphate, alkali metal tripolyphosphate, alkali metal sulfite, alkali metal polyphosphate, tetrasodium EDTA, trisodium nitrilotriacetate, guanidine carbonate, guanidine acetate or mixtures thereof.

12. A stable, water-soluble crop protection solid active compound formulation as claimed in claims 8 to 11, furthermore comprising formulation auxiliaries.

13. A stable, water-soluble crop protection solid active compound formulation as claimed in claims 8 to 12, comprising further crop protection active compounds.

14. A stable, water-soluble crop protection solid active compound formulation as claimed in claims 8 to 13, comprising
from 5 to 95% by weight of a cyclohexenone oxime ether of the general formula I,
from 5 to 95% by weight of a water-soluble basic salt,
from 0 to 95% by weight of a formulation auxiliary,
from 0 to 90% by weight of further crop protection active compounds.

15. A process for preparing a crop protection solid active compound formulation as claimed in claims 8 to 14, which comprises mixing a cyclohexenone oxime ether of the general formula I, the water-soluble basic salt, formulation auxiliaries if desired and further crop protection active compounds if desired, comminuting if desired and then agglomerating or compacting.

16. A process for preparing a crop protection solid active compound formulation as claimed in claims 8 to 14, which comprises dissolving a cyclohexenone oxime ether of the general formula I in an organic solvent, extracting with an aqueous solution of the water-soluble basic salt and then removing the water.

17. A process as claimed in claim 16, wherein the crop protection solid active compound formulation is comminuted if desired after removing the water and then agglomerated or compacted.

18. A process as claimed in claim 15 or 17, wherein extruder granulation, disk granulation, fluidized bed granulation or mixer granulation is used for agglomeration.

19. A process for controlling undesired vegetation, which comprises dissolving a herbicidally active amount of a crop protection solid active compound formulation as claimed in claims 8 to 14 and allowing it to act on the crop plant, its habitat and/or on its seed.

20. A stable, water-soluble crop protection solid active compound formulation as claimed in claim 8,
where
R² is sodium,
R³ is tetrahydrothiopyran-3-yl,
R⁴ and R⁵ are hydrogen,
Alk is CH₂CH(CH₃) and
R⁶ is p-chlorophenoxy.

21. 2-[1-(2-p-Chlorophenoxypropyloxy)iminobutyl]-5-(tetrahydrothiopyran-3-yl)-3-hydroxycyclohexenone sodium salt.

22. A stable, water-soluble crop protection solid active compound formulation as claimed in claim 13 or 14, comprising glyphosate or a salt of this compound as a further crop protection active compound.

## Revendications

1. Utilisation d'un sel basique hydrosoluble d'un acide ayant une valeur de pKa supérieure à 5, à l'exclusion des hydroxydes alcalins et des carbonates alcalins, pour la préparation d'une composition solide de substance active phytosanitaire stable à la conservation et soluble dans l'eau, contenant un éther de cyclohexénonoxime de formule générale I 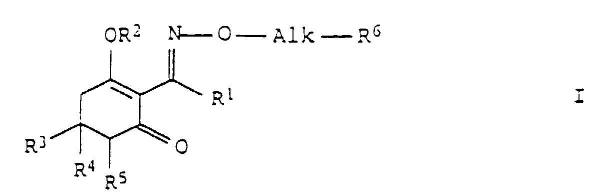 dans laquelle les symboles R¹ à R⁶ ont les significations suivantes :
R¹ : un groupe éthyle ou propyle ;
R² : l'hydrogène ou un équivalent d'un cation acceptable pour les usages agricoles ;
R³ : un groupe 2-(thioéthyl)propyle, tétrahydrothiopyran-3-yle, tétrahydrothiopyran-4-yle, tétrahydropyran-3-yle, tétrahydropyran-4-yle, 1-(méthylthio)cyclopropyle, 5-(isopropyl)isoxazol-3-yle, 2,5-diméthylpyrazol-3-yle, 2,4,6-triméthylphényle ou 2,4,6-triméthyl-3-butyrylphényle ;
R⁴ et R⁵ : indépendamment l'un de l'autre, l'oxygène, un groupe méthyle, méthoxycarbonyle ;
Alk : CH₂CH₂, CH₂CH(CH₃), CH₂CH=CH, CH₂CH=C(Cl) ou CH₂CH₂CH=CH ;
R⁶ : l'hydrogène, un groupe phényle, halogénophényle, dihalogénophényle, phénoxy, halogénophénoxy ou dihalogénophénoxy ;
pour la lutte contre les croissances de végétaux indésirables.

2. Utilisation d'un sel basique hydrosoluble selon la revendication 1, du groupe : métaborate, phosphate, hydrogénophosphate, pyrophosphate, métasilicate, orthosilicate, tétraborate, sulfite, tripolyphosphate, polyphosphate, métaphosphate, EDTA tétrasodique, nitrilotriacétate trisodique, guanidinoacétate, guanidinocarbonate ou de leurs mélanges pour la préparation d'une composition solide contenant une substance active phytosanitaire.

3. Utilisation d'un sel basique hydrosoluble du groupe : métaborate alcalin, tétraborate alcalin, métasilicate alcalin et d'ammonium, phosphate trialcalin et triammonique, hydrogénophosphate alcalin et d'ammonium, pyrophosphate alcalin, tripolyphosphate alcalin, sulfite alcalin, polyphosphate alcalin, EDTA tétrasodique, nitrilotriacétatetrisodique, guanidinocarbonate, guanidinoacétate ou de leurs mélanges pour la préparation d'une composition solide contenant une substance active phytosanitaire selon les revendications 1 et 2.

4. Utilisation d'un sel basique hydrosoluble selon les revendications 1 à 3 pour la préparation d'une composition solide contenant une substance active phytosanitaire, cette dernière consistant en un éther de cyclohexénonoxime du groupe : Sethoxydim, Cycloxydim, Clethodim, Tralkoxydim, Butroxydim, 2-(1-(3-chlorallyloxy)iminopropyl)-5-(tétrahydropyran-4-yl)-3-hydroxy-cyclohex-2-énone, 2-(1-(2-p-chlorophénoxypropyloxy)iminobutyl-5-(tétrahydrothiopyran-3-yl)-3-hydroxycyclohex-2-énone ou leurs mélanges.

5. Utilisation d'un sel basique hydrosoluble selon les revendications 1 à 4 pour la préparation d'une composition solide de substance active phytosanitaire contenant en outre des produits auxiliaires de formulation.

6. Utilisation d'un sel basique hydrosoluble selon les revendications 1 à 5 pour la préparation d'une composition solide de substance active phytosanitaire contenant en outre des produits auxiliaires de formulation.

7. Utilisation d'un sel basique hydrosoluble selon les revendications 1 à 6, pour la préparation d'une composition solide de substance active phytosanitaire contenant
5 à 95 % en poids d'un éther de cyclohexénonoxime de formule générale I,
5 à 95 % en poids d'un sel basique hydrosoluble,
0 à 95 % en poids de produits auxiliaires de formulation,
0 à 90 % en poids d'autres substances actives phytosanitaires.

8. Composition solide stable, soluble dans l'eau, de substance active phytosanitaire, contenant un éther de cyclohexénonoxime de formule générale I 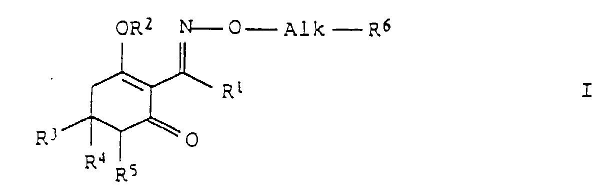 dans laquelle les symboles R¹ à R⁶ ont les significations suivantes :
R¹ : un groupe éthyle ou propyle ;
R² : l'hydrogène ou un équivalent d'un cation acceptable pour les usages agricoles ;
R³ : un groupe 2-(thioéthyl)propyle, tétrahydrothiopyran-3-yle, tétrahydrothiopyran-4-yle, tétrahydropyran-3-yle, tétrahydropyran-4-yle, 1-(méthylthio)cyclopropyle, 5-(isopropyl)isoxazol-3-yle, 2,5-diméthylpyrazol-3-yle, 2,4,6-triméthylphényle ou 2,4,6-triméthyl-3-butyrylphényle ;
R⁴ et R⁵, indépendamment l'un de l'autre : l'hydrogène, un groupe méthyle, méthoxycarbonyle ;
Alk : CH₂CH₂, CH₂CH(CH₃), CH₂CH=CH, CH₂CH=C(Cl) ou CH₂CH₂CH=CH ;
R⁶ : l'hydrogène, un groupe phényle, halogénophényle, dihalogénophényle, phénoxy, halogénophénoxy ou dihalogénophénoxy ;
et un sel basique hydrosoluble d'un acide ayant une valeur de pKa supérieure à 5, les hydroxydes alcalins, les carbonates alcalins et les sels d'ammonium étant exclus.

9. Composition solide stable, hydrosoluble, de substance active phytosanitaire selon la revendication 8, contenant en tant que substance active phytosanitaire un éther de cyclohexénonoxime du groupe : Sethoxydim, Cycloxydim, Clethodim, Tralkoxydim, Butroxydim, 2-(1-(3-chlorallyloxy)iminopropyl)5-(tétrahydropyran-4-yl)-3-hydroxycyclohex-2-énone, 2-(1-(2-p-chlorophénoxypropyloxy)iminobutyl-5-(tétrahydrothiopyran-3-yl)-3-hydroxy-cyclohex-2-énone ou leurs mélanges.

10. Compositions solide stable, hydrosoluble, de substance active phytosanitaire selon la revendication 8 ou 9, contenant en tant que sel hydrosoluble un métaborate, phosphate, hydrogénophosphate, pyrophosphate, métasilicate, orthosilicate, tétraborate, sulfite, tripolyphosphate, polyphosphate, métaphosphate, l'EDTA tétrasodique, le nitrilotriacétate trisodique, un guanidinoacétate, un guanidinocarbonate ou leurs mélanges.

11. Composition solide stable, hydrosoluble, de substance active phytosanitaire selon les revendications 8 ou 9, contenant en tant que sel basique hydrosoluble un métaborate alcalin, un tétraborate alcalin, un métasilicate alcalin, un phosphate trialcalin, un hydrogénophosphate alcalin, un pyrophosphate alcalin, un tripolyphosphate alcalin, un sulfite alcalin, un polyphosphate alcalin, l'EDTA tétrasodique, le nitrilotriacétate trisodique, un guanidinocarbonate, un guanidinoacétate ou leurs mélanges.

12. Composition solide stable, hydrosoluble, de substance active phytosanitaire selon les revendications 8 à 11, contenant en outre des produits auxiliaires de formulation.

13. Composition solide stable hydrosoluble de substance active phytosanitaire selon les revendications 8 à 12 contenant d'autres substances actives phytosanitaires.

14. Compositions solide stable, hydrosoluble, de substance active phytosanitaire selon les revendications 8 à 13, contenant
5 à 95 % en poids d'un éther de cyclohexénonoxime de formule générale I,
5 à 95 % en poids d'un sel basique hydrosoluble,
0 à 95 % en poids de produits auxiliaires de formulation,
0 à 90 % en poids d'autres substances actives phytosanitaires.

15. Procédé pour la préparation d'une composition solide de substance active phytosanitaire selon les revendications 8 à 14, caractérisé par le fait que l'on mélange un éther de cyclohexénonoxime de formule générale I, le sel basique hydrosoluble, le cas échéant des produits auxiliaires de formulation et le cas échéant d'autres substances actives phytosanitaires, on les broie éventuellement puis on les agglomère ou on les compacte.

16. Procédé pour la préparation d'une composition solide de substance active phytosanitaire selon les revendications 8 à 14, caractérisé par le fait que l'on dissout un éther de cyclohexénonoxime de formule générale I dans un solvant organique, on extrait par une solution aqueuse du sel basique hydrosoluble puis on élimine l'eau.

17. Procédé selon la revendication 16, caractérisé par le fait que, après élimination de l'eau, on broie éventuellement la composition solide de substance active phytosanitaire puis on l'agglomère ou on le compacte.

18. Procédé selon la revendication 15 ou 17, caractérisé par le fait que pour l'agglomération, on utilise des granulés obtenus à l'extrudeuse, des granulés obtenus au plateau, des granulés obtenus en couche tourbillonnaire ou des granulés obtenus au mélangeur.

19. Procédé pour combattre les croissances de végétaux indésirables, caractérisé par le fait que l'on dissout une quantité herbicide efficace d'une composition solide de substance active phytosanitaire selon les revendications 8 à 14 et on fait agir sur la plante cultivée, son habitat et/ou ses semences.

20. Composition stable, hydrosoluble, de substance active phytosanitaire selon la revendication 8; dans laquelle
R² représente le sodium,
R³ représente le groupe tétrahydrothiopyran-3-yle,
R⁴ et R⁵ représentent l'hydrogène,
Alk représente CH₂CH(CH₃) et
R6 représente un groupe p-chlorophénoxy.

21. Le sel de sodium de la 2-[1-(2-p-chlorophénoxypropyloxy)iminobutyl]-5-(tétrahydrothiopyran-3-yl)-3-hydroxycyclohexénone.

22. Composition solide stable, hydrosoluble, de substance active phytosanitaire selon la revendication 13 ou 14, contenant du glyphosate ou un sel de ce composé en tant qu'autre substance active phytosanitaire.
